# EUROPEAN PATENT APPLICATION

(11) **EP 2 034 417 A1**
(43) Date of publication of application: **11.03.2009**
(21) Application number: 08105252.4
(22) Date of filing: 05.09.2008
(51) Int. Cl.: G06F 17/30

(54) **Method and system for remote cache access**

(30) Priority: 05.09.2007 US 850441
(71) Applicant: Agfa HealthCare, 2640 Mortsel (BE)
(72) Inventor: Wegenkittl, Rainer, 3100, Sankt Poelten (AT); Dennison, Donald, Waterloo Ontario N2V 2P9 (CA); Potwarka, Lukas, Waterloo Ontario N2L 8M2 (CA); Mroz, Lukas, 1200, Wien (AT); Kanitsar, Armin, 1100, Wien (AT); Zeilinger, Gunter, 1150, Wien (AT)

(57) **Abstract**

A method of processing a request associated with an electronic document in a document management system at a local replicated system, the method comprising the steps of first receiving the request. The method further comprises determining whether the request is a read only request that may be processed at a local replicated system; routing the request to either a master document management server or a local replicated system; and monitoring the local replicated systems to determine whether subsequent transactions may be processed at the local replicated systems.

## Description

### FIELD OF THE INVENTION

The present invention relates to a document management systems More specifically the invention is related to improved methods and systems for accessing content associated with document management systems.

### BACKGROUND OF THE INVENTION

Due to the large volume of documents that are associated with many organizations, it has become increasingly necessary to devise methods by which large volumes of data may be organized and accessed. One method involves the use of document management systems.

Document management systems had initially been developed to capture images of electronic documents. Users of the system were able to access the document images that were stored on a central server. Document management systems have now developed to where they are used to store the actual electronic document that is created and for which access is required. Document management systems must be designed to ensure that they have the ability to index the electronic documents, store the electronic documents and provide access to respective users of the electronic documents.

As large organizations that may have facilities distributed across many countries make use of document management systems to manage their electronic documents, it has become necessary that methods and systems be developed to provide remote access to the system. Currently, users of document management systems may access the electronic documents through various methods including establishing a dedicated link to the central document management server, and accessing the document management system through the Internet. Regardless of the type of network communication that is employed, users of document management systems require that their requests for documents or for certain operations (i.e. retrieving a previously viewed document, or logging in) be performed in a timely and efficient manner.

Users of the same document management system may be met with differing response times for their requests. One reason for such delayed response times may be due to the geographic locations of the requesting users and the limitations that may be associated with their connectivity to the respective network.

One solution that has been devised to help increase the speed at which electronic documents are provided to users, is to make use of repositories of commonly accessed documents, or caches. The respective caches store electronic documents at a user's site that may be requested by the user. Therefore, when a request is made for an electronic document a check is performed to determine whether this electronic document is available to the user from a cache that would serve the user's request faster.

Through the implementation of caches, users are often provided with faster response times with respect to their document requests. However, many requests which are fulfilled by providing documents to the user from a cache still require interaction with a central server for the appropriate access to be granted. Therefore, even a simple read request in a document management system that makes use of remote cache may not be much faster than a read request that is fulfilled without the use of a cache.

### SUMMARY OF THE INVENTION

The above mentioned objects are realised by a method having the specific features defined in claim 1. Specific features for preferred embodiments of the invention are set out in the dependent claims.

In one aspect of the invention a method for determining where a request related to an electronic document received from a client device in a document management system should be processed is provided. The method comprises determining whether the request is a read only request that may be processed at a local replicated system; routing the request to either a master document management server or a local replicated system; and monitoring the local replicated systems to determine whether subsequent transactions may be processed at the local replicated systems.

In another aspect of the invention, a method of processing a request associated with an electronic document in a document management system at a remote site associated with a document management system is provided. The method comprises the steps of: (a) receiving the request; determining if the request is a read-only request; determining if a previous write operation has been completed; processing the request at the local replicated system where the determinations made at steps (b), (c) are true, and processing the request at a master server where one of the determinations made at steps (b), or (c) are false.

Further advantages and embodiments of the present invention will become apparent from the following description and drawings.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment, and in which:
FIG. 1 is a block diagram of a conventional document management system;
FIG. 2 is a block diagram of document management system illustrated in an exemplary embodiment;
FIG. 3 is a flowchart diagram illustrating steps of a request processing method;
FIG. 4 is a block diagram illustrating the interaction between a request and components of the document management system in an exemplary embodiment;
FIG. 5 is a flowchart diagram illustrating the steps of a write/update method; and
FIG. 6 is a flowchart diagram illustrating the steps of a remote cache access method.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practised without these specific details. In other instances, well-known methods, procedures and components have not been described in detail so as not to obscure the embodiments described herein. Furthermore, this description is not to be considered as limiting the scope of the embodiments described herein in any way, but rather as merely describing the implementation of the various embodiments described herein.

The embodiments of the systems and methods described herein may be implemented in hardware or software, or a combination of both. However, preferably, these embodiments are implemented in computer programs executing on programmable computers, each comprising at least one processor, a data storage system (including volatile and non-volatile memory and/or storage elements), at least one input device, and at least one output device. For example and without limitation, the programmable computer may be a mainframe computer, server, personal computer, laptop, personal data assistant, or cellular telephone. A program code is applied to input data to perform the functions described herein and generate output information. The output information is applied to one or more output devices, in known fashion.

Each program is preferably implemented in a high level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device (e.g. ROM or magnetic diskette), readable by a general or special purpose programmable computer, for configuring and operating the computer when the storage media or device is read by the computer to perform the procedures described herein. The inventive system may also be considered to be implemented as a computer-readable storage medium, configured with a computer program, where the storage medium so configured causes a computer to operate in a specific and predefined manner to perform the functions described herein.

Furthermore, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloadings, magnetic and electronic storage media, digital and analog signals, and the like. The computer useable instructions may also be in various forms, including compiled and non-compiled code.

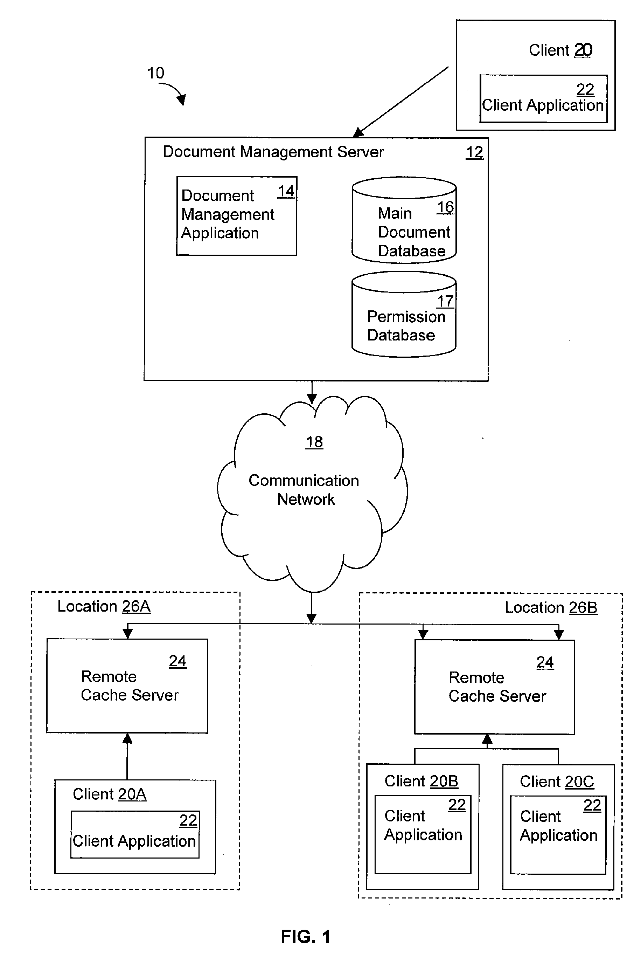

Reference is now made to FIG. 1 which illustrates one embodiment of components in a conventional document management system **10** . Document management system **10** allows for the storage and retrieval of electronic documents by users who are in various geographic locations. The electronic documents may be any type of electronic files that may be shared between users. Document management system **10** also provides functionality to the users allowing them to engage in collaborative discussions with other users regarding the respective electronic documents. Further, the document management system allows users to track the history of a document, including when it was created, accessed and last edited. Examples of document management systems that are currently available include, but are not limited to, Livelink, Microsoft Sharepoint, EMC and Filenet.

The conventional document management system **10** comprises a document management server **12**, a document management application **14**, a main document database **16**, a metadata/permission database **17**, a communication network **18**, and one or more client devices **20**.

The document management server **12** has resident upon it, or accessible to it, the document management application **14**, the main document database **16** and the metadata/permission database **17**. The server **12** is a server-type computing device that allows for a connection to a network **18** which therefore allows a remote client device **20** access to the server **12**.

The server **12** and, more specifically, the document management application **14**, receives and processes requests for electronic documents that are stored in the database **16**. The document management application **14** determines the access requirements and access parameters that are associated with each user and each document, and then either allows or denies a request.

The main document database **16** stores electronic documents that are associated with the document management system **10**. The documents may be any electronic file that one or more users wish to access through use of the system **10**. The main document database **16** may also be implemented as a link to an electronic file system.

The metadata database **17** stores the respective metadata that is associated with the electronic documents that are stored in the document database **16**. The metadata database **17** includes information relating to the permissions associated with each document and who may access the respective documents. The metadata database also includes other information relating to the document including details regarding the owner of the document, the data, unique ID and information (pointers) regarding where the documents are stored, along with or other user or system defined metadata.

The communication network **18** is any type of network that allows for communication between client and server devices. The communication network **18** may include, but is not limited to a local area network (LAN), a wide area network (WAN), the Internet or the Intranet.

The client device **20** may be any type of computing device that can access the document management server **12**. One or more client device **20**, respectively, may be part of the document management system **10**. Examples of a client device **20** include but are not limited to, personal computers, laptop computers, slim line computers, server based computers, handheld computers, and any other such device that is able to provide an interface and connect to the server **12** through a communication network. Each client device **20** has an output device (not shown) such as a monitor or screen associated with it for viewing the respective documents from the database **16** and for engaging with the respective document. Each client device **20** also is associated with an input device (not shown) that allows the user to make requests for the various documents.

The client device **20** may have associated with it a client application **22**. The client application **22** allows the client device **20** to connect to the document management server **12**. The client application may be a dedicated application that is installed upon the client device **20** for purposes of giving the user access to the document management server **12**. In an exemplary embodiment, the client application **22** may also be a web browser, where the user may access the server through a conventional web-based interface.

Each client device **20** may have access to a remote cache server **24**. The remote cache server **24** allows for distributed document caching and routes document requests to a file system cache (not shown).

The remote cache server **24** routes requests for metadata to the metadata databases. The remote cache server **24** has access to copies of documents that have been recently requested by one or more client devices **20**. The respective client device **20** may be physically present in different geographic locations **26.** As the client device **20** accesses the document management server **12** through the Internet in many instances, the client device **20** itself may be located in any location with Internet access.

In this embodiment of the conventional document management system **10**, any request made by a user of a client device **20** for any document is received at the document management server **12**. The document management server **12**, upon receiving a request, makes a determination as to whether the user that is making the request has the appropriate permissions. Therefore, even where a document is being requested that may be resident on the remote cache server that is located at the user's location **26**, the request is first transmitted to the respective document management server **12** for processing including permission checking. Therefore, with the conventional document management systems, all requests made by the user are transmitted to the central server for processing. As such requests are processed firstly at the central server, the requesting user is met with increased response times with respect to their transaction requests. All requests from users in remote locations are handled by the remote cache server. Where a user is not in a remote location, the user's client device may connect directly with the management server **12**.

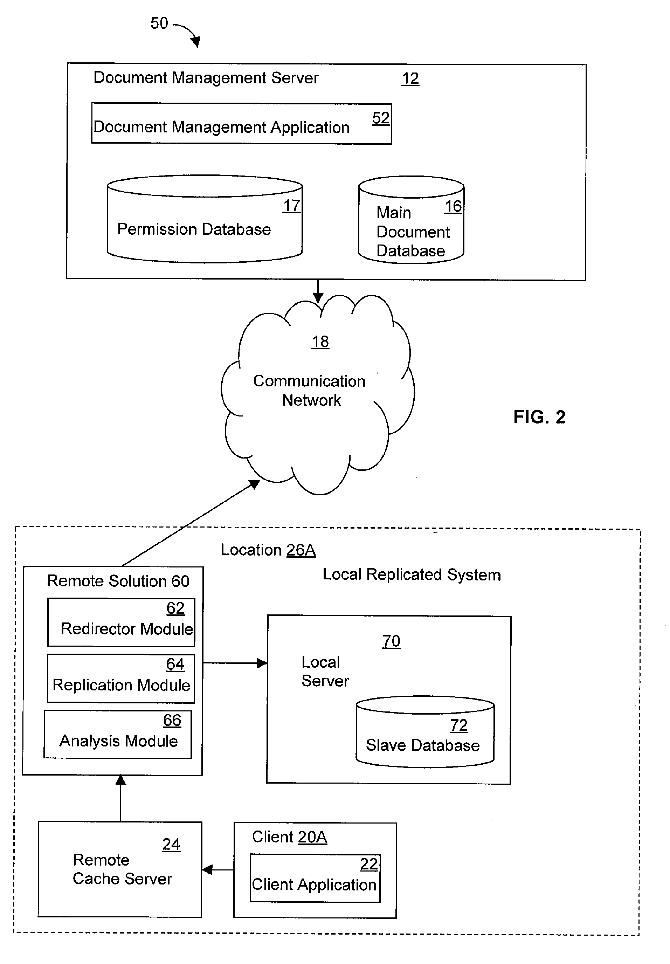

Reference is now made to FIG. 2, where an advanced cache document management system **50** is shown in an exemplary embodiment. The system **50**, as shown in the exemplary embodiment, allows users located in various geographic locations to access documents associated with the management server **12**. The document management system **50** provides the users with faster response times with respect to the read requests that are made by the users. Read requests may be any operation that does not require an update or write operation to be performed upon any of the electronic documents.

The document management system **50** has resident upon the management server **12** a document management application **52**, a permission database **17** and a main document database **16**. The document management application **52** allows consistency through replication of the respective databases that are stored on the server and that have replicas that may be accessed at the respective remote locations. The respective client device **20** at a remote location **26A** may access the management server **12** through a communication network **18**.

The remote application **60** receives the requests that are made by users of the system **50**. As described above, the users of the system **50** may wish to perform various operations. For purposes of example, the operations that a user of the document management system **50** may perform are described in relation to a document management system that is implemented through the Internet and specifically through Livelink in an exemplary embodiment. Examples of such operations may include, but are not limited to, read, write, update and browse operations. Where the system is web-based, as in the exemplary embodiment, read operations include, but are not limited to, browse operations, download operations, and retrieve operations.

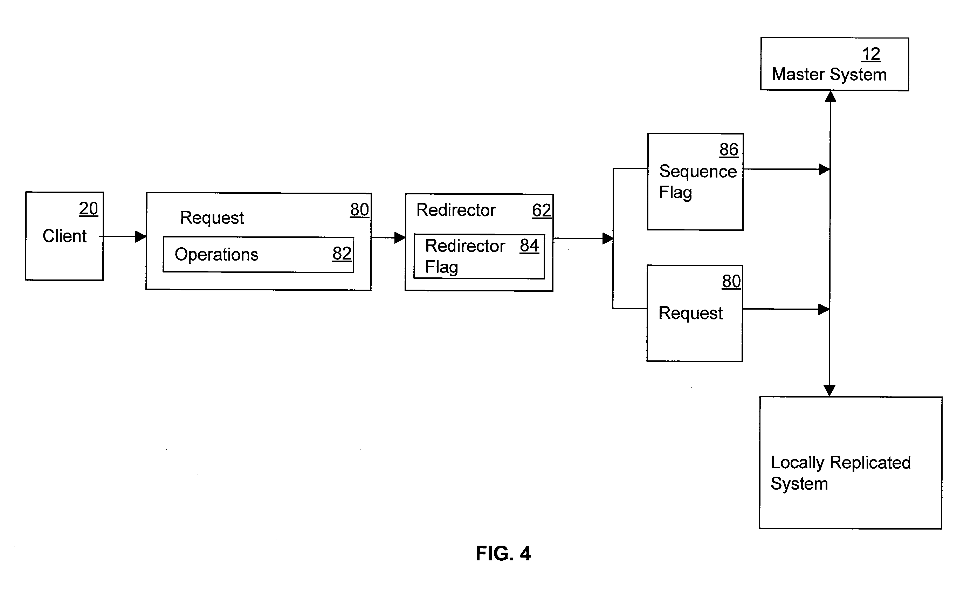

The remote application **60** in an exemplary embodiment has associated with it a redirector module **62**, a replication module **64** and an analysis module **66**. The operation of the respective modules will be described in further detail with regard to FIGS. 4 to 6.

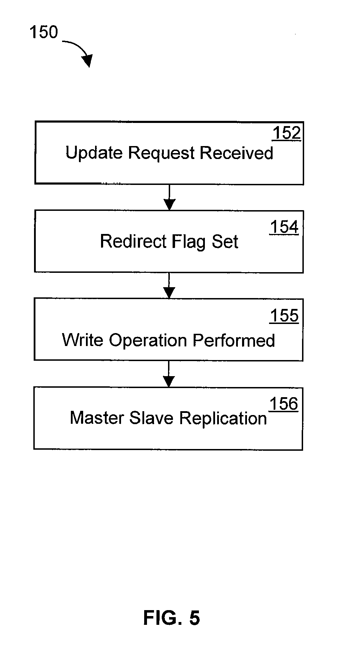

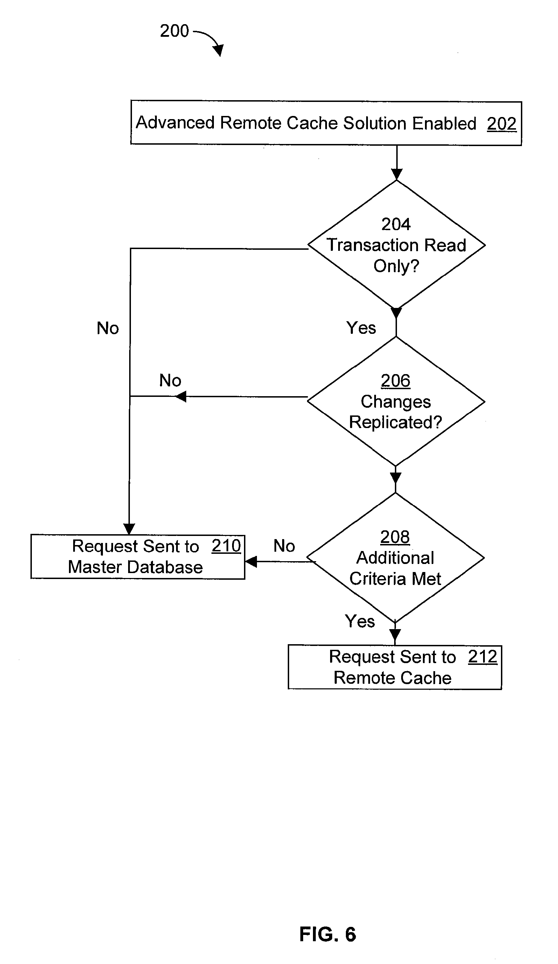

The redirector module **62** determines, based on the request made by the user, whether the request should be processed locally or whether it should processed at the management server **12** for processing. The operation of the redirector module will be described in further detail with regard to FIG. 5 and FIG. 6.

The replication module **64** ensures consistency between the master and slave databases. The replication method in an exemplary embodiment involves the user of SQL replication techniques. Consistency between the master database and the slave database is ensured with regard to the various metadata that is associated with the electronic documents. The replication module **64** also ensures that read operations are not performed while a write operation has not been completed. By ensuring that a read request may not be processed at a local system while a write operation has not been completed, ensures that the user is provided with accurate data. The term localized system is used to refer to the remote locations **26** that have access to a remote cache server **24**, the remote application **60**, the local document management server **70** and the local slave database **72**, which are explained in detail below

The analysis module **66** receives the requests and analyses the request to determine the various operations that may be associated with the request. For example, one request may have associated with it various operations that may be a combination of read and write operations. The analysis module **66** receives the request and interacts with the other respective modules to ensure that the requests are appropriately processed.

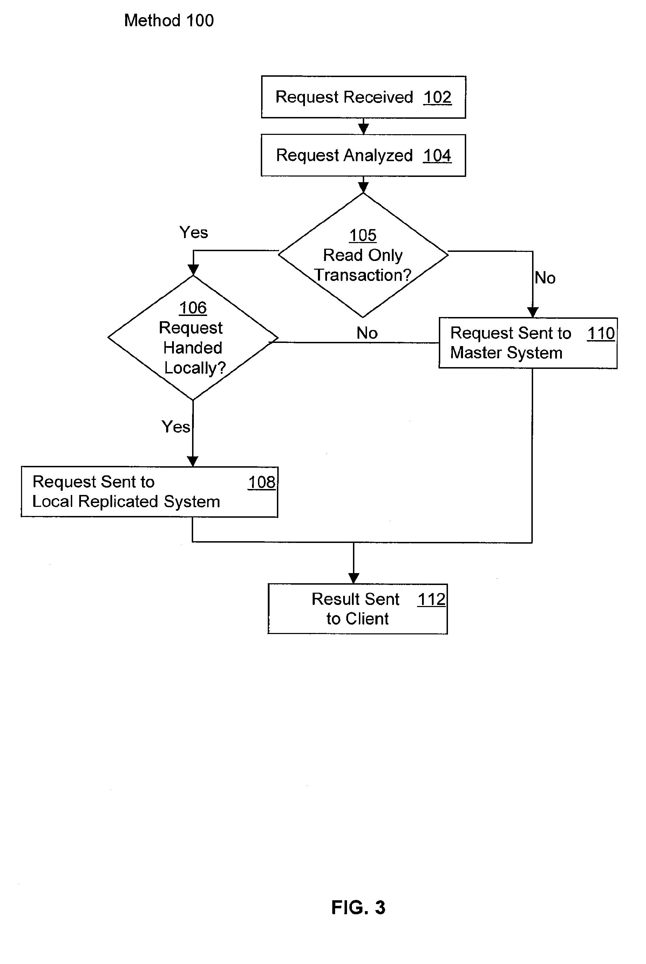

Each remote cache server **24** has access to a slave database **72** through a local document management server **70**. Generally, in an exemplary embodiment, one slave database **72** may be implemented in each local system or respective remote location. As an example, where a corporation has a head office where the master server **12** is located, the respective offices that have clients that connect to the head office for purposes of accessing the document management system **50** may have access to a slave database **72** through the remote cache server and the remote application **60**. The slave database **72** comprises a subset of the data that is contained in the metadata database **17**. The slave database **72** in an exemplary embodiment is comprised of the same data records for each respective location. This is contrasted with the remote cache (not shown) that is associated with each remote server **24** used at each location **26A** or local system that only stores a subset of documents from the main database **16**. Specifically, the remote cache stores locally accessed or locally created files that differ from location to location. Documents that are stored in the remote cache are accessed if it is determined that the user has requested a read only operation and the respective checks to facilitate this transaction are performed locally. This method is described in further detail below. Reference is now made to FIG. 3, where a flowchart diagram illustrates the basic operational steps **100** of a request processing method are shown in an exemplary embodiment. Method **100** is explained with reference to users who are accessing the system **50** from a remote location. Where a user makes a direct connection to the document management server **12**, their requests will be processed at the document management server **12**. Operational steps **100** begin at step **(102)**, where a user makes a request of the system **50** for an operation to be performed. Specifically, the request may comprise any operations that are supported by the document management system **50**.

At step **(104)**, the request is received at, and analyzed by the remote application **60**, and more specifically by the analysis module **66**. The request is not transmitted directly to the document management server **12**. The remote application **60** receives the request before any subsequent processing is performed. At step **(105)**, the request is transmitted to the re-director module **62**. The re-director module **62** is able to determine whether a transaction request comprises only read-transactions or whether the transaction request comprises a write operation. In an exemplary embodiment, a read only table or database is stored at the remote location **26A** which as mentioned above may also be referred to as the local replicated system. The read only database in an exemplary embodiment stores a list of transactions that are read only and that therefore may be performed at the local replicated system. The master for this respective database is stored at the master document management server **12** and replicated to the local systems. If it is determined at step **(105)** that the transaction request is a read only transaction, step **(106)** is executed. At step **(106)** a check is performed to determine whether the read only transaction request may be handled locally without requiring that a request is made to the server **12**. The processing of step **(106)** determines whether the appropriate pre-processing steps have been completed to allow for the read transaction to be processed. The specific operations that are carried out at step **(106)** are described in further detail with regards to FIG. 6.

If it is determined at step **(105)** that the transaction request involves operations that involve write or update transactions, method **100** proceeds to step **(110)**, where the requests are processed at the master document management server **12**. At step **(106)**, if it is determined even though the transaction is a read only request that it may not be processed locally, then method **100** proceeds to step **(110)**. At step **(110)** the transaction is executed at the master database **16**. When a document is retrieved from the master database **16**, a copy is stored at the remote cache. Where an update that is performed at the master document management server **12** requires locally stored databases or tables to be updated, the locally stored database or tables have the respective data updated through replication.

If it is determined at step **(106)** that the request may be processed locally, method **100** then proceeds to step **(108)**, where the request is processed at the local replicated system.

At the completion of steps **(108)** or **(110)**, the requests are processed and the respective results are available to the user. Reference is now made to FIG. 4, where a block diagram illustrating the path that a request takes from the client **20** in an exemplary embodiment. The request originates from a client device **20** based on a request made by the user or the client device **20** itself. The client generates a request **80** based on the requirements of the client **20** or the specification of the user. The request comprises one or more operations **82**. The operations **82** may be any operation that may be performed on the electronic documents associated with the system **50**.

The request is then received at the remote application **60**, and is processed by the redirector module **66**. The redirector module **66** has associated with it a redirector flag **86**. The redirector flag **86** is used to indicate that the respective write operations that are being performed at the master database **16** have not been replicated at the respective replicated local system. Therefore, if a read request is processed at the local replicated system while a write request has not been fully replicated, the result of the read operation may yield an inaccurate result. The use and method of setting the respective redirector flag is illustrated in further detail with regards to FIG. 5. The redirector module **66** then causes the request **80** and its associated operations to be processed at either the master document management server **12** or the local replicated systems. The methodology employed by the redirector module is explained in further detail below with regards to FIG. 6.

In one embodiment, sequence values are used to determine whether write operations have been replicated at the respective databases. Specifically, in one exemplary embodiment, upon the execution of each write operation, the master document management server **12** assigns and keeps track of sequence values that are used to determine whether changes to the master database **16** have been replicated to the respective local replicated systems. The sequence values are incremented each time an update is to be performed and distributed to the local systems. When the update has been performed at the local replicated system, the local sequence value is incremented. When the sequence value at the local replicated system is less than that of the sequence value at the master database **16**, this indicates that the changes have not been replicated.

Reference is now made to FIG. 5 and the steps of an update method **150** that are shown in an exemplary embodiment. The update method **150** is implemented where a request that is made by the user involves write or update operations, and therefore an update must be made to the respective master database **16.** Method **150** begins at step **(152)** where it is determined that an update/write request has been made. After it has been determined that an update request has been made, method **150** then proceeds to step **(154)**. At step **(154)**, the redirect flag **84** is set. The redirect flag **84** indicates that a write operation is being performed, and that it has not been completed in its entirety. The system will consider a write or update operation to have been completed in its entirety when the write operation that is being performed has been replicated to the respective local replicated system associated with the user. Method **150** then proceeds to step **(155)** where the respective write operation is performed upon the master database **16**. Method **150** then proceeds to step **(156)** where a one-way master slave replication process takes place. The master slave replication ensures that the update operation performed on the respective master database is replicated across the respective databases. The sequence values as described above are made use of in this process of tracking whether the write or update operations have been fully replicated. At the conclusion of the master slave replication process, the redirect flag **84** is set to indicate that no write operations remain to be performed. When the redirect flag **84** indicates that no write operations remain to be performed upon the respective databases, subsequent read operations may then be processed at the local replicated systems.

Reference is now made to FIG. 6, where a flowchart illustrating the steps of a local system access method **200** is shown in an exemplary embodiment. The local system access method **200** as described herein illustrates the steps that are executed at step **(104)** as shown in FIG. 3. Specifically, once it has been determined that the operation is a read only operation, it is then determined whether the request may be carried out at the local system. Therefore, method **200** begins at step **(202)**, where a check is performed to determine if the appropriate processing methods are enabled.

Method **200** then proceeds to step **(204)** to determine whether the transaction is a read-only transaction. The method of determining whether a transaction is a read only transaction has been previously described in one embodiment through the use of look-up tables that store read only requests. If it is determined that the transaction is read only, method **200** proceeds to step **(206)** where a check is performed to determine whether any of write operations remain to be written. If the transaction is not a read only transaction, method **200** proceeds to step **(210).** As referenced with regards to method **150** as shown in FIG. 5, a flag is set to indicate that write operations remain to be performed. Where the flag indicates that write operations are remaining, step **(204)** causes method **200** to proceed to step **(210)**. At step **(210)**, the requested read operation is undertaken at the master database **16**.

If it is determined at step **(206)** that all of the changes from the previous write operation have been replicated to the respective databases, method **200** proceeds to step **(208)**. At step **(208)** a check is performed to determine whether the additional criteria are met. Additional criteria may be any additional checks that may be performed that can be expanded based on user defined criteria and defined exception handling rules.

If the additional criteria are met at step **(208)**, method **200** then proceeds to step **(212)**. If it is determined at step **200** that the additional criteria are not met, then method **200** proceeds to step **(210)** and the operations as detailed above are performed.

If it is determined at step **(208)**, that the additional criteria are met, method **200** proceeds to step **(212)**, where the requested operation is performed at the local system. Upon the requested read operation being performed, method **200** provides the resulting data to the user.

Through use of the respective systems and methods that have been described herein, read only operations that make use of data stored on remote caches may be processed without recourse to any data or processing operations that may take place at the master server. While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the invention and nonlimiting and it will be understood by persons skilled in the art that other variants and modifications may be made without departing from the scope of the invention as defined in the claims appended hereto.

## Claims

1. A method for determining whether a request related to an electronic document received from a client device in a document management system should be processed; the method **characterized by**:
(a) determining whether the request is a read only request that may be processed at a local replicated system;
(b) routing the request to either a master document management server or a local replicated system; and
(c) monitoring the local replicated systems to determine whether subsequent transactions may be processed at the local replicated systems.

2. The method of claim 1, further comprising receiving the request through a web browser.

3. The method of claim 1, further comprising the step of checking to determine whether a previous write operation has been completed before processing the request at the local replicated system.

4. The method of claim 1, wherein the master database and the local replicated system are accessible to one another through a communication network.

5. The method of claim 4, wherein the communication network may be selected from the group comprising the Internet, the Intranet, a wide area network, and a local area network.

6. A computer-readable medium upon which a plurality of instructions are stored, the instructions for performing the steps of the method as claimed in claim 1.

7. A method of processing a request associated with an electronic document in a document management system at a local document management replicated system, the method **characterized by** the steps of:
(a) receiving the request;
(b) determining if the request is a read-only request;
(c) determining if a previous write operation has been completed;
(d) processing the request at the local replicated system where the determinations made at steps (b), (c) are true, and processing the request at a master server where one of the determinations made at steps (b), or (c) are false.

8. The method of claim 7, further comprising receiving the request through a web browser.

9. The method of claim 7, wherein the master database and the local replicated system are accessible to one another through a communication network.

10. The method of claim 9, wherein the communication network may be selected from the group comprising the Internet, the Intranet, a wide area network, and a local area network.

11. A computer-readable medium upon which a plurality of instructions are stored, the instructions for performing the steps of the method as claimed in claim 1.

12. A system for determining whether a request related to an electronic document received from a client device in a document management system should be processed; the system comprising a memory for storing a plurality of instructions; and a processor coupled to the memory, said processor **characterized by** the steps of:
(a) determining whether the request is a read only request that may be processed at a local replicated system;
(b) routing the request to either the master document management server or a local replicated system; and
(c) monitoring the local replicated systems to determine whether subsequent transactions may be processed at the local replicated systems.

13. The system of claim 12, further comprising receiving the request through a web browser.

14. The system of claim 12, further comprising the step of checking to determine whether a previous write operation has been completed before processing the request at the local replicated system.

15. The system of claim 12, wherein the master database and the local replicated system are accessible to one another through a communication network.

16. The system of claim 15, wherein the communication network may be selected from the group comprising the Internet, the Intranet, a wide area network, and a local area network.

17. A system of processing a request associated with an electronic document in a document management system at a remote cache; the system comprising a memory for storing a plurality of instructions; and a processor coupled to the memory, said processor **characterized by** the steps of:
(a) receiving the request;
(b) determining if the request is a read-only request;
(c) determining if a previous write operation has been completed;
(d) processing the request at the local replicated system where the determinations made at steps (b), (c) are true, and processing the request at a master server where one of the determinations made at steps (b), or (c) are false.

18. The system of claim 17, further comprising receiving the request through a web browser.

19. The system of claim 17, further comprising the step of checking to determine whether a previous write operation has been completed before processing the request at the local replicated system.

20. The system of claim 17, wherein the master database and the local replicated system are accessible to one another through a communication network.

21. The system of claim 20, wherein the communication network may be selected from the group comprising the Internet, the Intranet, a wide area network, and a local area network.
